# EUROPÄISCHE PATENTSCHRIFT

(11) **EP 2 399 486 B1**
(45) Veröffentlichungstag und Bekanntmachung des Hinweises auf die Patenterteilung: **21.01.2015**
(21) Anmeldenummer: 11167010.5
(22) Anmeldetag: 22.05.2011
(51) Int. Cl.: A47B 91/02, F16B 12/40, F16B 12/44, A47B 91/00

(54) **Eckverbinder mit Standfuß**
Corner connector with base
Connecteur d'angle doté d'un pied de support

(30) Priorität: 23.06.2010 DE 202010005701 U
(43) Veröffentlichungstag der Anmeldung: 28.12.2011
(73) Patentinhaber: Fritz Berger GmbH, 92318 Neumarkt (DE)
(72) Erfinder: Haas, Wolfgang, 53804, Much (DE)
(74) Vertreter: Vonnemann, Gerhard

(56) Entgegenhaltungen:
- DE-A1- 4 019 125
- DE-U1-202004 013 039
- GB-A- 2 220 042
- US-A1- 2004 174 105

## Beschreibung

Die vorliegende Erfindung betrifft einen bodenseitigen Eckverbinder für Rohrrahmenmöbel mit nur einem Standfuß und daran angeordnetem Standfußteller.

Rohrrahmenmöbel werden in vielen Bereichen des täglichen Lebens eingesetzt und sind somit allgemein bekannt. Neben Gartenmöbeln und Möbeln für den gastronomischen Außeneinsatz basieren insbesondere Camping-Möbel oftmals auf einem Rohrrahmentraggestell. Da diese Traggestelle in der Regel aus mehreren Rohrrahmenelementen bestehen, bedarf es eines Verbindungselementes zwischen zwei oder mehreren aneinander angrenzenden Rohrrahmenelementen, um diese miteinander zu verbinden. Die Verbindung zwischen den Rohrrahmenelementen ist meist starr ausgebildet, um ein stabiles Traggestell zu formen, kann aber auch gelenkig sein. Ein Verbindungselement an einer Rohrrahmenecke wird nachfolgend als Eckverbinder bezeichnet.

Übliche Rohrrahmenmöbel stehen in der Regel auf an den bodenseitigen Eckverbinder angeordneten Füßen auf einem Untergrund. Der Kontakt zum Untergrund kann auf zwei Arten hergestellt werden, zum einen direkt über die Rohrrahmenelemente, zum anderen indirekt über die an dem dem Untergrund zugewandten Teil des Traggestells angeordneten Verbindungselemente, insbesondere Eckverbinder. Diese den Kontakt des Rohrrahmenmöbels zum Untergrund herstellenden Eckverbinder weisen meist einen Standfuß und einen daran angeordneten Standfußteller auf und erweisen sich als besonders vorteilhaft, da je nach Ausgestaltung des Eckverbinders mit Standfuß und daran angeordnetem Standfußteller eine Vielzahl von Eigenschaften des Rohrrahmenmöbels beeinflusst werden können, ohne dass das Traggestell abgeändert werden muss. Hierzu zählen neben anderen die Bodenfreiheit, die Adaptionsfähigkeit an unebene Untergründe und die damit verbundene Standfestigkeit des Rohrrahmenmöbels.

Aus der Offenlegungsschrift US 2004/0174105 ist ein Serverschrank mit einem Rohrrahmen bekannt. An bodenseitigen Ecken des Rohrrahmens sind Eckverbinder vorgesehen, wobei an den Eckverbindern Standfußteller aufweisende Hauptstandfüße angeordnet sind. Die Standfußteller der Hauptstandfüße sind zu den Eckverbindern ausschließlich vertikal versetzt angeordnet und tragen deshalb zu einer angestrebten Verbesserung der Standfestigkeit des Serverschrankes nicht bei. Die an einer Türseite des Serverschrankes angrenzenden Eckverbinder weisen hierzu je einen Hilfsstandfuß auf, dessen Standfußteller zu dem jeweiligen Eckverbinder sowohl vertikal als auch horizontal versetzt angeordnet ist. Eine Vergrößerung der Standfläche und damit eine erhöhte Standfestigkeit des Serverschrankes werden erst durch den Einsatz von Hilfsstandfüßen möglich. Nachteilig an dieser Lehre ist das zwingende Vorhandensein von Hilfsstandfüßen neben den Hauptstandfüßen.

Als nächstkommender Stand der Technik wird das Camping-Küchenmöbel Jum Box der Anmelderin angesehen. Der hierbei verbaute Eckverbinder mit Standfuß erlaubt mit großem Vorteil die Einstellung der wirksamen Länge des Standfußes. Durch einen Schraubmechanismus ist jeder der vier Standfüße separat in Vertikalrichtung längenveränderbar. Somit lassen sich die Bodenfreiheit variieren und eventuelle Bodenunebenheiten ausgleichen. Jedoch selbst bei wackelfreiem Stand des Rohrrahmenmöbels kann eine weitere Erhöhung der Standfestigkeit wünschenswert sein, beispielsweise wenn das Möbel innerhalb eines Fahrzeuges aufgestellt und somit translatorische und rotatorische Beschleunigungen ausgesetzt ist.

Daher liegt der Erfindung die Aufgabe zugrunde, einen Eckverbinder mit Standfuß und daran angeordnetem Standfußteller anzugeben, der die Standfestigkeit des Rohrrahmenmöbels über einen wackelfreien Stand hinaus erhöht, ohne dabei dessen Masse unnötig zu vergrößern oder den Massenschwerpunkt artifiziell abzusenken und somit Einbußen hinsichtlich des Einsatzspektrums und der Handhabung des Rohrrahmenmöbels hinnehmen zu müssen.

Zur Lösung dieser Aufgabe schlägt die Erfindung vor, dass der Standfußteller in Einbausituation des Eckverbinders sowohl horizontal als auch vertikal versetzt zu der Rohrrahmenecke angeordnet ist, indem er schiefwinkelig zu einer in Einbaulage vertikal durch den, durch die Verlängerung der drei Rohre innerhalb des Eckverbinders definierten, Schnittpunkt verlaufenden Achse angeordnet ist. Einerseits ermöglicht diese sehr vorteilhafte Merkmalskombination eine Vergrößerung der Standfläche und somit eine Erhöhung der Standfestigkeit, ohne dass aufgrund einer ansonsten notwendigen Massenvergrößerung oder Massenschwerpunktabsenkung die Einsatzfähigkeit des Rohrrahmenmöbels leidet. Andererseits erlaubt die erfindungsgemäße Vorrichtung eine Verkleinerung der Standfläche auf eine Fläche gleich oder kleiner der Grundfläche des Traggestells, um ein Hinausragen von Bauteilen, insbesondere des Standfußtellers über die seitliche Berandung des Traggestelles zu vermeiden oder sogar zusätzlichen Raum in Bodennähe freizugeben. Der gewonnene Raum wird insbesondere dann benötigt, wenn das Rohrrahmenmöbel bündig an einer Wand aufgestellt werden soll, jedoch Fußleisten, Heizungsrohre oder Kabelschächte in Bodennähe an dieser verlaufen. Des Weiteren erlaubt diese hochflexible Anordnung Bodenunebenheiten auszugleichen und somit einen wackelfreien Stand des Rohrrahmenmöbels herzustellen und durch die horizontale Variabilität der Standfußtellerposition nicht belastbare Bereiche des Untergrundes auszusparen, ohne dass die Position des Möbels verändert werden muss.

In einer besonders vorteilhaften Ausgestaltung der Erfindung ist der Standfuß um eine durch den Eckverbinder verlaufende vertikale Achse arretierbar rotierbar ausgebildet. Hiermit wird ein einfacher und schnell durchzuführender Wechsel zwischen Vergrößerung und Verkleinerung der Standfläche beziehungsweise eine einfache, durch eine Kreisbahn mit der vertikalen Achse als Mittelpunkt vordefinierte Selektion der Standfußtellerposition erreicht.

Des Weiteren ist erfindungsgemäß vorgesehen, dass der Standfuß in seiner wirksamen Länge verstellbar ist. Diese Längenverstellbarkeit ermöglicht eine Variabilität der räumlichen Distanzierung von Eckverbinder und Standfußteller. Der so gewonnene Freiheitsgrad kann mit großem Vorteil zum Ausgleich von Bodenunebenheiten eingesetzt werden.

Eine besonders bevorzugte Ausführungsform zeichnet sich dahingehend aus, dass der Standfuß mindestens zweiteilig ist und diese mindestens zwei Standfußteile stufenlos oder feinstufig relativ zueinander verstellbar sind. Diese nahezu kontinuierliche Verstellbarkeit der wirksamen Länge des Standfußes erlaubt eine individuelle und optimale Anpassung der Standfußlänge an die jeweiligen Untergrundbegebenheiten. Zusätzlich beschränkt sich die Verstellbarkeit der wirksamen Länge auf das Bauteil Standfuß. Andere Bauteile des Rohrrahmenmöbels sind nicht involviert und können deshalb unabhängig von den Erfordernissen hinsichtlich der Längenverstellbarkeit konstruiert und gestaltet werden.

Insbesondere sieht die Erfindung vor, dass die mindestens zwei Standfußteile durch einen Schraubmechanismus miteinander in Verbindung stehen. Diese Standardanordnung zum Verbinden zweier Bauteile wird mit großem Vorteil eingesetzt, um eine einfache und kostengünstige technische Umsetzung der Verstellbarkeit der wirksamen Länge des Standfußes zu erzielen.

Des Weiteren ist erfindungsgemäß vorgesehen, dass der Standfußteller am Standfuß gelenkig, insbesondere kardanisch, angeordnet ist. Bei Bodenunebenheiten in der Größenordnung von Zentimetern erweist sich die gelenkige Anordnung als sehr vorteilhaft, da sich der Standfußteller automatisch parallel zur lokalen Orientierung der Bodenfläche ausrichtet und somit stets flächig auf dem Untergrund aufliegt und folgerichtig die Standfestigkeit des Rohrrahmenmöbels erhöht. Lokale materialermüdende und den Untergrund schädigende Druckspitzen aufgrund einer eventuellen Verkantung des Standfußtellers relativ zum Untergrund sind ausgeschlossen.

In einer besonders vorteilhaften Ausgestaltung der Erfindung ist vorgesehen, dass der Standfußteller eine dreipunktartige Kontaktfläche zum Untergrund aufweist. Bei Bodenunebenheiten in der Größenordnung von Millimetern sorgt diese Dreipunkt-Anordnung für einen sicheren, wackelfreien Kontakt zwischen Standfußteller und Untergrund und erhöht damit die Standfestigkeit des Rohrrahmenmöbels.

Die Erfindung wird in einer bevorzugten Ausführungsform unter Bezugnahme auf eine Zeichnung beispielhaft beschrieben, wobei weitere vorteilhafte Einzelheiten der Figur der Zeichnung zu entnehmen sind.

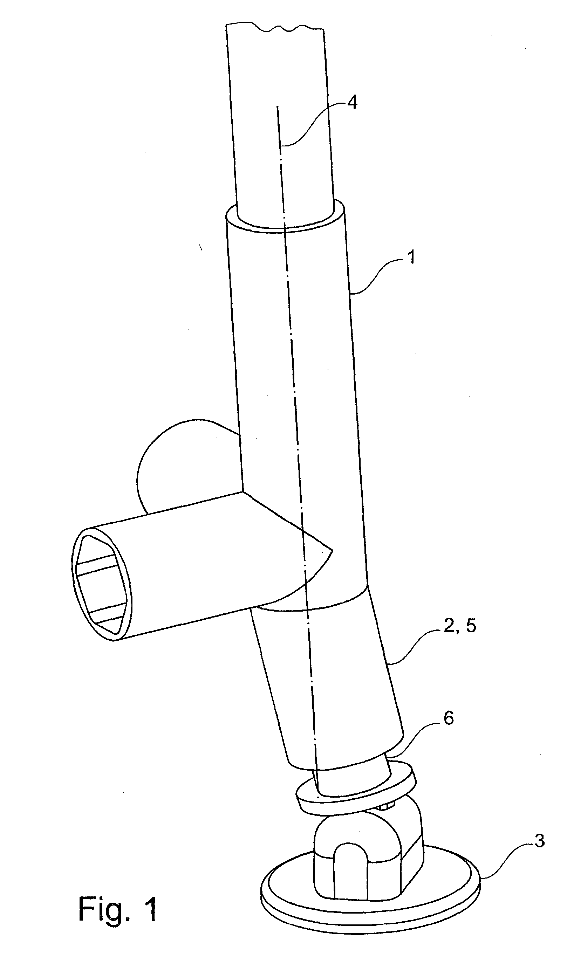

Die **Fig. 1** der Zeichnung zeigt eine perspektivische Ansicht eines erfindungsgemäßen Eckverbinders 1 für Rohrrahmenmöbel mit Standfuß 2 und daran angeordnetem Standfußteller 3. Der Eckverbinder 1 besteht aus drei, sich paarweise unter einem Winkel von 90° treffenden Rundrohren aus Kunststoff. Die Innenprofile der Rundrohre sind kreisförmig, elliptisch oder regelmäßig mehreckig. Insbesondere sind Kombinationen aus den genannten Innenprofilen pro Eckverbinder 1 denkbar. In einer weiteren Ausführungsform ist der Eckverbinder aus Metall, insbesondere Aluminium, gefertigt. Die das Traggestell des Rohrrahmenmöbels bildenden Rohrrahmenelemente gehen mit dem Eckverbinder 1 eine kraftschlüssige Verbindung ein. In **Fig. 1** nicht dargestellt ist die Verbindung in Form eines Bajonettverschlusses. Der Standfuß 2 ist schiefwinklig zu einer vertikal durch den Schnittpunkt der drei Rundrohre innerhalb des Eckverbinders 1 verlaufenden Achse 4 angeordnet, um diese Achse 4 arretierbar rotierbar und besteht aus zwei Standfußteilen 5, 6, welche über einen selbsthemmenden Schraubmechanismus miteinander verbunden sind und die Verstellbarkeit der wirksamen Länge des Standfußes 2 bewirken. Aus Gründen der Unfallverhütung sind die beweglichen Teile verblendet. Die Verblendung dient gleichzeitig als Anschlag zur Festlegung der minimalen Länge des Standfußes 2. Der am unteren Ende des Standfußes 2 mittels eines Scharniergelenkes beweglich befestigte Standfußteller 3 ist horizontal nach außen und vertikal nach unten versetzt zu der Rohrrahmenecke angeordnet. Somit wird mit großem Vorteil die Standfläche des Rohrrahmenmöbels vergrößert und dessen Standfestigkeit erhöht. Um eine verbesserte Anpassung des Standfußtellers 3 an Bodenunebenheiten zu erzielen, ist in einer weiteren Ausführungsform ein Kugelgelenk als Verbindung zwischen Standfuß 2 und Standfußteller 3 vorgesehen. Der in **Fig. 1** abgebildete Standfußteller 3 weist eine kreisförmige, plane Kontaktfläche zum Untergrund auf und ist dadurch einfach und kostengünstig herstellbar. Ein andersgearteter, für den Außeneinsatz konzipierter Standfußteller 3 zeigt eine dreipunktartige, stets wackelfrei auf dem Untergrund aufliegende Kontaktfläche und erlaubt somit eine weitere Erhöhung der Standfestigkeit des Rohrrahmenmöbels.

### BEZUGSZEICHENLISTE

- 1: Eckverbinder
- 2: Standfuß
- 3: Standfußteller
- 4: Vertikale Achse
- 5: Standfußteil
- 6: Standfußteil

## Patentansprüche

1. Bodenseitiger Eckverbinder (1) für Rohrrahmenmöbel mit nur einem Standfuß (2) und daran angeordnetem Standfußteller (3) wobei der Eckverbinder (1) als ein Verbindungselement zwischen zwei oder mehreren aneinandergrenzenden Rohrrahmenelementen des Rohrrahmens an einer Rohrrahmenecke aus drei sich paarweise unter einem Winkel von 90° treffenden Rohren ausgebildet ist, **dadurch gekennzeichnet, dass** der Standfußteller (3) in Einbausituation des Eckverbinders (1) sowohl horizontal als auch vertikal versetzt zu der Rohrrahmenecke angeordnet ist, indem er schiefwinkelig zu einer in Einbaulage vertikal durch den, durch die Verlängerung der drei Rohre innerhalb des Eckverbinders 1 definierten, Schnittpunkt verlaufenden Achse (4) angeordnet ist.

2. Eckverbinder (1) nach Anspruch 1, **dadurch gekennzeichnet, dass** der Standfuß (2) um eine durch den Eckverbinder (1) verlaufende vertikale Achse (4) arretierbar rotierbar ist.

3. Eckverbinder (1) nach Anspruch 1 oder 2, **dadurch gekennzeichnet, dass** der Standfuß (2) in seiner wirksamen Länge verstellbar ist.

4. Eckverbinder (1) nach einem der vorhergehenden Ansprüche,
**dadurch gekennzeichnet, dass** der Standfuß (2) mindestens zweiteilig ist und diese mindestens zwei Standfußteile (5, 6) stufenlos oder feinstufig relativ zueinander verstellbar sind.

5. Eckverbinder (1) nach einem der vorhergehenden Ansprüche,
**dadurch gekennzeichnet, dass** die mindestens zwei Standfußteile (5, 6) durch einen Schraubmechanismus miteinander in Verbindung stehen.

6. Eckverbinder (1) nach einem der vorhergehenden Ansprüche, **dadurch gekennzeichnet, dass** der Standfußteller (3) am Standfuß (2) gelenkig, insbesondere kardanisch, angeordnet ist.

7. Eckverbinder (1) nach einem der vorhergehenden Ansprüche, **dadurch gekennzeichnet, dass** der Standfußteller (3) eine dreipunktartige Kontaktfläche zum Untergrund aufweist.

## Claims

1. Floor-side corner connector (1) for tubular frame furniture having only one base (2) and base plate (3) disposed thereon, wherein the corner connector (1) is configured as a connecting element between two or more adjacent tubular frame elements of the tubular frame at a tubular frame corner comprising three tubes meeting in pairs at an angle of 90°, **characterized in that** in an installation situation of the corner connector (1) the base plate (3) is disposed both horizontally and vertically offset to the tubular frame corner, whereby it is disposed at an oblique angle to an axis (4) running vertically in the installation position through the point of intersection defined by the extension of the corner connector (1) inside the three tubes.

2. The corner connector (1) according to claim 1, **characterized in that** the base (2) is lockable rotatably about a vertical axis (4) running through the corner connector (1).

3. The corner connector (1) according to claim 1 or 2, **characterized in that** the base (2) is adjustable in its effective length.

4. The corner connector (1) according to any one of the preceding claims, **characterized in that** the base (2) is at least two-part and these at least two base parts (5, 6) are adjustable relative to one another steplessly or finely.

5. The corner connector (1) according to any one of the preceding claims, **characterized in that** the at least two base parts (5, 6) are connected to one another by a screw mechanism.

6. The corner connector (1) according to any one of the preceding claims, **characterized in that** the base plate (3) is disposed in an articulated manner on the base (2), in particular in a gimballed manner.

7. The corner connector (1) according to any one of the preceding claims, **characterized in that** the base plate (3) has a three-point-like contact surface to the ground.

## Revendications

1. Raccord d'angle (1) côté sol pour des meubles à cadre tubulaire comprenant uniquement un pied (2) et des disques de pied (3) disposés dessus, sachant que le raccord d'angle (1) est formé en tant qu'élément de liaison entre deux ou plusieurs éléments de cadre tubulaire du cadre tubulaire se délimitant l'un sur l'autre sur un angle de cadre tubulaire de trois tubes se rencontrant par paires en un angle de 90°, **caractérisé en ce que** le disque de pied (3), lorsque le raccord d'angle (1) est monté, est disposé décalé tant horizontalement que verticalement par rapport à l'angle de cadre tubulaire, **en ce qu'**il est disposé en ayant un angle penché par rapport à un angle (4) vertical en situation de montage et passants travers le point de section défini par le prolongement des trois tubes à l'intérieur du raccord d'angle (1).

2. Raccord d'angle (1) selon la revendication 1, **caractérisé en ce que** le pied (2) est rotatif en pouvant être bloqué sur un axe (4) vertical passant à travers le raccord d'angle (1).

3. Raccord d'angle (1) selon la revendication 1 ou 2, **caractérisé en ce que** le pied (2) est réglable dans sa longueur active.

4. Raccord d'angle (1) selon l'une des revendications précédentes, **caractérisé en ce que** le pied (2) est au moins en deux parties, et ces au moins deux parties de pied (5, 6) sont réglables de façon continue ou avec de légers crans l'une par rapport à l'autre.

5. Raccord d'angle (1) selon l'une des revendications précédentes, **caractérisé en ce que** les au moins deux parties de pied (5, 6), sont reliées entre elles par un mécanisme vissé.

6. Raccord d'angle (1) selon l'une des revendications précédentes, **caractérisé en ce que** le disque de pied (3) est disposé de façon articulée, en particulier cardanique, sur le pied (2).

7. Raccord d'angle (1) selon l'une des revendications précédentes, **caractérisé en ce que** le disque de pied (3) présente une surface de contact de type trois points vers le support.
